# EUROPEAN PATENT APPLICATION

(11) **EP 3 085 583 A1**
(43) Date of publication of application: **26.10.2016**
(21) Application number: 15164185.9
(22) Date of filing: 20.04.2015
(51) Int. Cl.: B60R 21/015

(54) **A SEATBELT ARRANGEMENT**

(71) Applicant: Autoliv Development AB, 447 83 Vårgårda (SE)
(72) Inventor: Sabourin, Pierre, 78130 Chapet (FR)
(74) Representative: Sandstedt, Jonas Sven James

(57) **Abstract**

The present disclosure relates to a vehicle seatbelt arrangement (6) comprising a seatbelt (7), a rotatable seatbelt retractor spindle (8) on which the seatbelt (7) is arranged to be wound, and a first rotational angle sensor (20a, 20b, 20c) that is arranged to detect an angular displacement of the seatbelt retractor spindle (8). The seatbelt arrangement (6) comprises a seatbelt linear displacement detector arrangement (27, 27') that is arranged to detect a linear movement of the seatbelt (7) that corresponds to the detected angular displacement of the seatbelt retractor spindle (8).

## Description

### TECHNICAL FIELD

The present disclosure relates to a vehicle seatbelt arrangement comprising a seatbelt, a rotatable seatbelt retractor spindle on which the seatbelt is arranged to be wound, and a first rotational angle sensor that is arranged to detect an angular displacement of the seatbelt retractor spindle.

Seatbelts have been used in vehicles for a long time, decreasing the possible injuries to seat-belted vehicle occupants in the case of an impact. Typically so-called three-point safety-belt are used with one end of the safety-belt being anchored to a part of the vehicle, an intermediate part of the safety-belt being provided with a lock tongue releasably engageable with a fixed lock tongue receiver, and the other end of the seatbelt, which may pass through a pillar-loop, being wound on to a spindle of a retractor. The retractor incorporates a mechanism which locks the spindle of the retractor to prevent further safety-belt being paid out from the retractor when an accident or a potential accident situation is sensed.

Furthermore, a seatbelt arrangement may comprise an electric motor that is arranged to wind the seatbelt by rotating the spindle of the retractor, as described in US 2009005937. By means of such a motor, it is possible to pre-pretension the belt in pre-crash situation, where such a situation has been detected by radars or other pre-crash sensors, either directly or by tensioning the seatbelt's winding spring.

A control unit is arranged to control the amount of electric current that is required for proper winding at a certain moment, and for this purpose it is desired to have information regarding the positon of the seatbelt. This means that it is desired to have information regarding how much of the seatbelt that is wound on the spindle, and thus how much of the seatbelt that is outside the retractor.

Many sensor arrangements for detecting the seatbelt position are known, for example belt rotation sensors, as described in US 2009005937.

US 2010114436 discloses seatbelt payout sensors that may include an electrical sensor, a mechanical sensor, a magnetic sensor, an optical sensor, or any suitable sensor for measuring the length of the seatbelt that is withdrawn from the seatbelt spindle. A seatbelt payout sensor may include a rotation counter associated with the seatbelt spool or one or more magnetic elements embedded in the seatbelt at one or more predetermined locations related to predetermined lengths of the seatbelt.

However, all previous such sensor arrangements lack the ability to detect the absolute position of the seatbelt at any time.

It is therefore the object of the present disclosure to provide an uncomplicated sensor system for detecting the absolute position of a seatbelt at any time.

This object is achieved by means of a vehicle seatbelt arrangement comprising a seatbelt, a rotatable seatbelt retractor spindle on which the seatbelt is arranged to be wound, and a first rotational angle sensor that is arranged to detect an angular displacement of the seatbelt retractor spindle. The seatbelt arrangement further comprises a seatbelt linear displacement detector arrangement that is arranged to detect a linear movement of the seatbelt that corresponds to the detected angular displacement of the seatbelt retractor spindle.

This object is also achieved by means of a method for determining an absolute position of a vehicle seatbelt. The method comprises:
- Detecting an angular displacement of a seatbelt retractor spindle on which the seatbelt is arranged to be wound.
- Detecting a linear movement of the seatbelt that corresponds to the detected angular displacement of the seatbelt retractor spindle.
- Determining an absolute position of the seatbelt from the detected angular displacement of the seatbelt retractor spindle and the corresponding linear movement of the seatbelt.

According to an example, the seatbelt arrangement comprises at least one control unit that is arranged to determine an absolute position of the seatbelt from the detected angular displacement of the seatbelt retractor spindle and the corresponding linear movement of the seatbelt.

According to another example, said control unit is arranged to control at least one safety device in a vehicle in dependence of the absolute position of the seatbelt. Such a safety device may for example be in the form of an electric motor and/or an airbag.

According to another example, if an emergency situation is detected, said control unit is arranged to control the electric motor to retract the seatbelt onto the seatbelt retractor spindle such that the seatbelt is tensioned, restraining an occupant prior to a possible collision.

According to another example, said control unit is arranged to determine airbag inflation properties in dependence of the absolute position of the seatbelt.

According to another example, the seatbelt linear displacement detector arrangement either comprises
- a seatbelt roller to which the seatbelt is arranged to be in contact with such that the seatbelt roller is arranged to rotate when the seatbelt is moved a certain length; or
- an optical detector that is arranged to detect the length displacement directly on seatbelt.

Other examples are disclosed in the dependent claims.

A number of advantages are provided by means of the present disclosure. For example:
- high reliability; and
- inexpensive and uncomplicated.

### BRIEF DESCRIPTION OF THE DRAWINGS

The present disclosure will now be described more in detail with reference to the appended drawings, where:
- Figure 1: schematically shows a vehicle;
- Figure 2: schematically shows a vehicle seat with a seatbelt arrangement;
- Figure 3: schematically shows a cut-open view of a seatbelt housing according to a first example;
- Figure 4: schematically shows a cut-open view of a seatbelt housing according to a second example; and
- Figure 5: shows a flowchart for a method according to the present disclosure.

### DETAILED DESCRIPTION

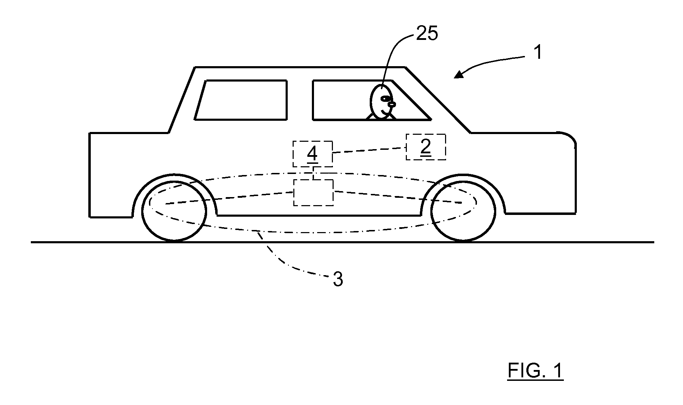

Figure 1 shows a vehicle 1, typically an automobile, which comprises a number of safety devices 2, 3, for example airbags such as dashboard airbags 2 positioned in front of occupants 25 of the vehicle and an emergency braking system 3, where the safety devices 2, 3 are controlled by a safety control unit 4.

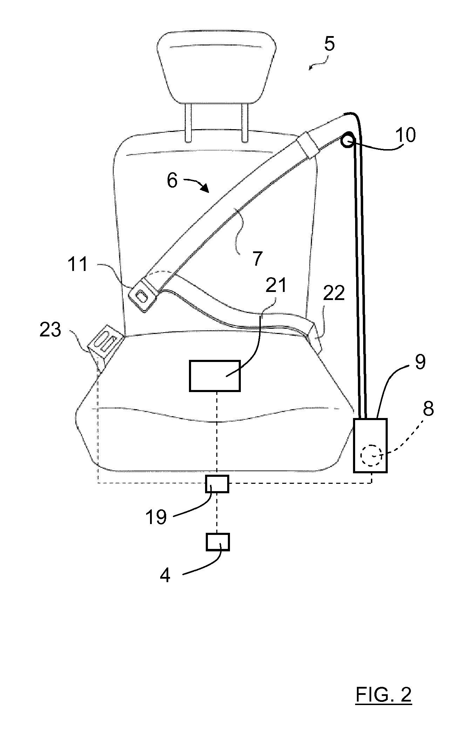

Figure 2 shows a vehicle seat 5 and a seatbelt arrangement 6. The seatbelt arrangement 6 comprises a seatbelt 7 that is arranged to protect an occupant (not shown in Figure 2 for reasons of clarity) seated on the seat 5 in case of an impact, and a seatbelt housing 9. The seatbelt 7 is paid out from a rotatable seatbelt retractor spindle 8 around which it is wound, where the spindle 8 is positioned in the seatbelt housing 9.

The seatbelt 7 extends via a shoulder anchor guide 10 to a lock tongue 11 and to an end part 22 that is fixed to a base of the seat 5. The lock tongue 11 may be detachably connected to a fixed lock tongue receiver 23, such that a so-called three-point seatbelt is formed.

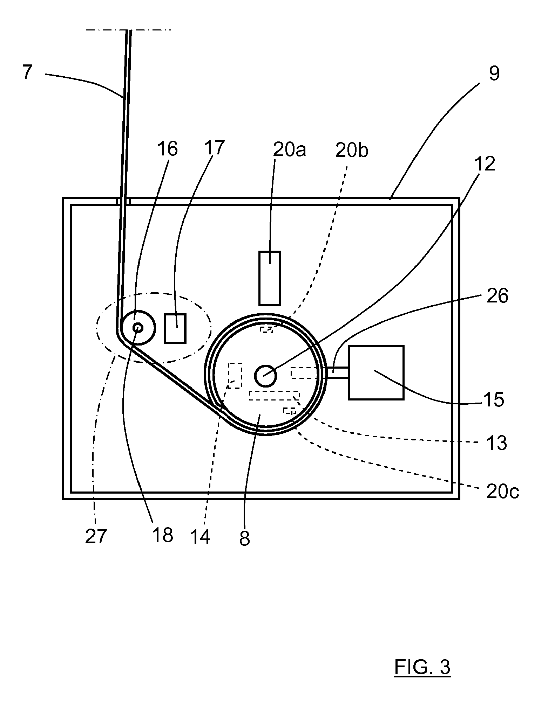

With reference also to Figure 3, showing a first example and schematically indicating relevant components in the seatbelt housing 9 as shown in a cut-open view, the spindle 8 is rotatable around a spindle shaft 12 against the force of a take-up spring 13. The take-up spring 13 is arranged to bias the spindle 8 to turn in a direction to wind the seatbelt 7 around the spindle 8, retracting the seatbelt 7 into the seatbelt housing 9.

The seatbelt housing 9 comprises a clamp mechanism 14 that is arranged to clamp the seatbelt 7 in an emergency to restrain an occupant. The seatbelt housing 9 also comprises a safety device in the form of an electric motor 15 that is arranged to rotate the spindle 8 when energized by acting of the spindle 8 by means of an actuator 26. Such an actuator 26 may for example be constituted by a gear such as a worm-gear.

The electric motor 15 can tighten and/or release the seatbelt 7, which actions may be taken for many reasons. For example, when an emergency situation is detected, the seatbelt 7 may be tightened in order to situate an occupant properly before a dashboard airbag 2 is inflated. Furthermore, the electric motor 15 may be used for assisting the take-up spring 13 when the seatbelt 7 is released, such that it swiftly is wound on the spindle 8, releasing the occupant. Also, the electric motor 15 may be arranged to maintain a comfort tension for the seatbelt 7.

The seatbelt arrangement 6 comprises a first rotational angle sensor 20a, 20b, 20c that is arranged to detect to which extent the spindle 8 is rotated around the spindle shaft 12, i.e. an angular displacement of the seatbelt retractor spindle 8. Such a rotational angle sensor 20a, 20b, 20c may for example comprise a sensing unit 20a and at least two Hall elements 20b, 20c in a previously known way. Alternatively, a magnetic disc or similar may be used (not shown).

According to the present disclosure, the seatbelt arrangement 6 comprises a seatbelt linear displacement detector arrangement 27, in this example comprising a seatbelt roller 16 that is arranged to rotate around an axis 18, and a second rotational angle sensor 17. The seatbelt 7 is arranged to be in contact with the seatbelt roller 16 such that the seatbelt roller 16 rotates around the axis 18 when the seatbelt 7 is moved a certain length. The detected rotation of the seatbelt roller 16 corresponds to a certain length that the seatbelt 7 has been moved. The second rotational angle sensor 17 may be of the same kind as the first rotational angle sensor 20a, 20b, 20c that is arranged at the spindle 8.

Since the seatbelt 7 is wound on the spindle 8 to a certain degree, the spindle 8 is rotated around the spindle shaft 12 a certain angular distance for a length of seatbelt that changes. This is due to the fact that a total diameter of the spindle 8 and the already wound seatbelt changes as the seatbelt 7 is wound on or off the spindle 8. This is not the case with the seatbelt roller 16, since the seatbelt 7 is not wound up on the seatbelt roller 16, only in contact with it such that it rotates when the seatbelt 7 is displaced.

By keeping track of how much the spindle 8 rotates for a corresponding certain linear movement of the seatbelt 7 and linking this to a certain amount of seatbelt 7 that is wound on the spindle 8, it is possible to detect the absolute position of the seatbelt 7 at any time. In other words, by means of the above arrangement, it is possible to keep track of the length of the part of the seat that is wound on the spindle, and of the length of the part of the seat that is extending outside the seatbelt housing 9.

This may in this example be expressed as a ratio between the angular rotation of the spindle 8 and the angular rotation of the seatbelt roller 16.

Information regarding the absolute position of the seatbelt 7 is acquired by a seatbelt control unit 19 that also is connected to the lock tongue receiver 23, such that the seatbelt control unit 19 also acquires information regarding whether the seatbelt 7 lock tongue 11 is fastened in the lock tongue receiver 23 or not. Except for issuing a warning to a seated person, this information may for example be used for controlling the electric motor 15 in a desired manner. The seatbelt control unit 19 is connected to the safety control unit 4.

If an emergency situation is detected, the electric motor 15 is arranged to retract the belt into the seatbelt housing 9 such that the seatbelt 7 is tensioned, restraining an occupant prior to a possible collision. The restraining action is correlated with the information regarding the absolute position of the seatbelt 7, and during an impact the electric motor 15 may further be arranged to release the belt to a certain extent in order to enhance collision force absorption.

The information regarding the absolute position of the seatbelt 7 may be used for other purposes as well, for example for determining airbag inflation properties in dependence of the present length of seatbelt 7 that is outside the seatbelt housing 9. This may be used to indicate if there is an increased probability that a seated person is close to and/or leaning towards the dashboard in the vehicle 1 that comprises a dashboard airbag 2. If the probability of such a situation is determined to exceed a certain threshold, the dashboard airbag 2 may be controlled to inflate to a lesser extent than if the probability of such a situation is determined to fall below said certain threshold. The electric motor 15 may be arranged to first retract the seatbelt 7 into the seatbelt housing 9 such that a seated person that is close to and/or leaning towards the dashboard is drawn away from the dashboard airbag, towards the seat, before the dashboard airbag is inflated. The seated person is thus relocated to a safer position in a pre-crash situation

The above may be combined with a weight indicator 21 in the seat 5, enabling an estimation of a seated person's normal seat belt circumference, such that it may be determined if a certain detected present length of seatbelt 7 that is outside the seatbelt housing 9 corresponds to the seated person's normal seat belt circumference. If that is the case, the seated person may be assumed to be properly seated, and not leaning towards the dashboard. Such a weight indicator 21 is for example connected to the seatbelt control unit 19.

The present disclosure relates to acquiring information regarding the absolute position of the seatbelt 7 in a reliable and uncomplicated manner by determining an angular displacement of the seatbelt retractor spindle 8 and a corresponding linear movement of the seatbelt 7. This information is used in any suitable way; it is not necessarily used for controlling an electric motor as described in the example above, but may only be used for determining airbag inflation properties in dependence of the present length of seatbelt 7 that is outside the seatbelt housing 9 as described above. Alternatively, it may be used for controlling a seatbelt pyrotechnical pre-tensioning device, or for other desired purposes. Any combination of different usages of the absolute position of the seatbelt 7 is of course possible. Other types of rotational angle sensors 17; 20a, 20b, 20c may of course be used, for example optical sensors. Furthermore, other types of seatbelt linear displacement detector arrangements 27 are of course conceivable, for example optical detectors of different kinds.

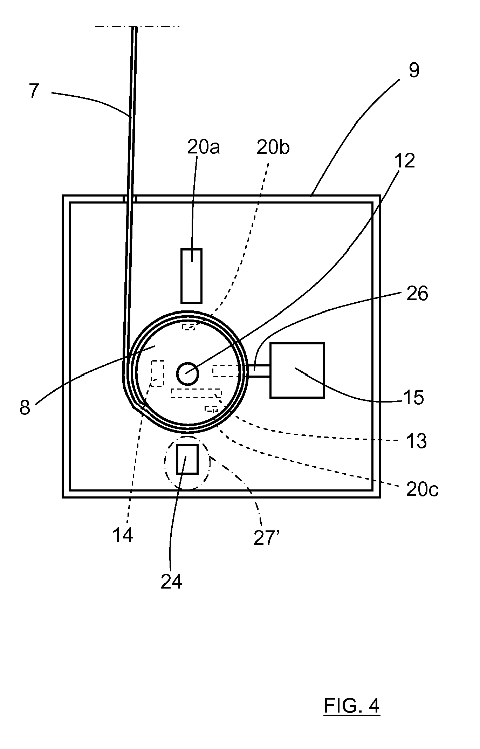

With reference to Figure 4, showing a second example, an alternative seatbelt linear displacement detector arrangement 27' comprises an optical detector 24 that here is placed close to the spindle 8, detecting the length displacement directly on seatbelt that is wound on the spindle 8. Except for the alternative seatbelt linear displacement detector arrangement 27', the other items in Figure 4 are the same as in the first example.

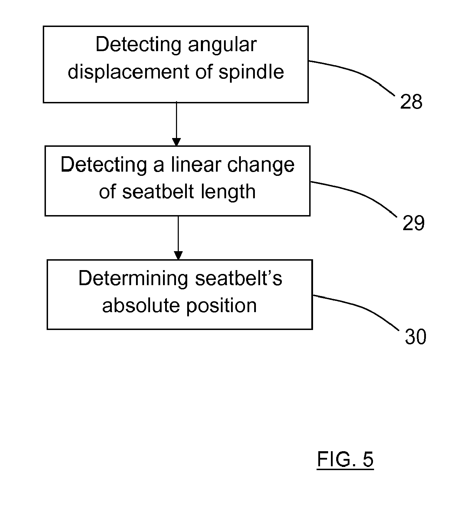

With reference to Figure 5, the present disclosure also relates to a method for determining an absolute position of a vehicle seatbelt 7, where the method comprises the steps:
28: Detecting an angular displacement of a seatbelt retractor spindle 8 on which the seatbelt 7 is arranged to be wound.
29: Detecting a linear movement of the seatbelt 7 that corresponds to the detected angular displacement of the seatbelt retractor spindle 8.
30: Determining an absolute position of the seatbelt 7 from the detected angular displacement of the seatbelt retractor spindle 8 and the corresponding linear movement of the seatbelt 7.

The present disclosure is not limited to the examples above, but may vary freely within the scope of the dependent claims. For example, when the electric motor 15 is present, it may replace the take-up spring 13, or may be arranged to tighten or release the tension of the take-up spring 13 by acting on the take-up spring 13 by means of an actuator such that a softer connection between the electric motor 15 and the spindle 8 is obtained.

There is no need for a special seatbelt housing 9, the spindle 8 can be positioned in any suitable manner. The seatbelt linear displacement detector arrangement 27, 27' can be positioned at any suitable position along the seatbelt 7.

The safety control unit 4 and the seatbelt control unit 19 can be one and the same control unit, alternatively comprise several control units.

A seatbelt arrangement comprises several parts, here only those relevant to describing the present disclosure have been mentioned and schematically indicated in the drawings. How parts not shown or discussed interact and are positioned is obvious for the skilled person.

In figure 3 and Figure 4, several parts are only schematically indicated; their exact appearance, position and function may vary, and is obvious for the skilled person.

Instead of a clamp mechanism 14, the seatbelt may be controlled by the electric motor 15 only in the case of an collision.

Generally, the present disclosure relates to a vehicle seatbelt arrangement 6 comprising a seatbelt 7, a rotatable seatbelt retractor spindle 8 on which the seatbelt 7 is arranged to be wound and a first rotational angle sensor 20a, 20b, 20c that is arranged to detect an angular displacement of the seatbelt retractor spindle 8. The seatbelt arrangement 6 comprises a seatbelt linear displacement detector arrangement 27, 27' that is arranged to detect a linear movement of the seatbelt 7 that corresponds to the detected angular displacement of the seatbelt retractor spindle 8.

According to an example, the seatbelt arrangement 6 comprises at least one control unit 4, 19 that is arranged to determine an absolute position of the seatbelt 7 from the detected angular displacement of the seatbelt retractor spindle 8 and the corresponding linear movement of the seatbelt 7.

According to an example, said control unit 4, 19 is arranged to control at least one safety device 2, 3, 15 in a vehicle 1 in dependence of the absolute position of the seatbelt 7.

According to an example, said safety device is in the form of an electric motor 15.

According to an example, if an emergency situation is detected, said control unit 4, 19 is arranged to control the electric motor 15 to retract the seatbelt 7 onto the seatbelt retractor spindle 8 such that the seatbelt 7 is tensioned, restraining an occupant prior to a possible collision.

According to an example, during an impact, said control unit 4, 19 is arranged to control the electric motor 15 to release the belt to a certain extent in order to enhance collision force absorption.

According to an example, said safety device comprises at least one airbag 2, where said control unit 4, 19 is arranged to determine airbag inflation properties in dependence of the absolute position of the seatbelt 7.

According to an example, said control unit 4, 19 is arranged to determine the probability that a seated person is close to and/or leaning towards a vehicle dashboard with a dashboard airbag 2, and if said probability is determined to exceed a certain threshold, said control unit 4, 19 is arranged to control the dashboard airbag 2 to inflate to a lesser extent than if the probability of such a situation is determined to fall below said certain threshold.

According to an example, the first rotational angle sensor 20a, 20b, 20c comprises a sensing unit 20a and at least two Hall elements 20b, 20c.

According to an example, the seatbelt linear displacement detector arrangement 27, 27' either comprises
- a seatbelt roller 16 to which the seatbelt 7 is arranged to be in contact with such that the seatbelt roller 16 is arranged to rotate when the seatbelt 7 is moved a certain length; or
- an optical detector 24 that is arranged to detect the length displacement directly on seatbelt.

The present disclosure also relates to a method for determining an absolute position of a vehicle seatbelt 7, where the method comprises:
28: detecting an angular displacement of a seatbelt retractor spindle 8 on which the seatbelt 7 is arranged to be wound;
29: detecting a linear movement of the seatbelt 7 that corresponds to the detected angular displacement of the seatbelt retractor spindle 8; and
30: determining an absolute position of the seatbelt 7 from the detected angular displacement of the seatbelt retractor spindle 8 and the corresponding linear movement of the seatbelt 7.

According to an example, the method comprises controlling at least one safety device 2, 3, 15 in a vehicle 1 in dependence of the absolute position of the seatbelt 7.

According to an example, if an emergency situation is detected, an electric motor 15 is controlled to retract the seatbelt 7 onto the seatbelt retractor spindle 8 such that the seatbelt 7 is tensioned, restraining an occupant prior to a possible collision.

According to an example, the method comprises determining airbag inflation properties in dependence of the absolute position of the seatbelt 7.

According to an example, the method comprises determining the probability that a seated person is close to and/or leaning towards a vehicle dashboard with a dashboard airbag 2, and if said probability is determined to exceed a certain threshold, controlling the dashboard airbag 2 to inflate to a lesser extent than if the probability of such a situation is determined to fall below said certain threshold.

## Claims

1. A vehicle seatbelt arrangement (6) comprising a seatbelt (7), a rotatable seatbelt retractor spindle (8) on which the seatbelt (7) is arranged to be wound and a first rotational angle sensor (20a, 20b, 20c) that is arranged to detect an angular displacement of the seatbelt retractor spindle (8), **characterized in that** the seatbelt arrangement (6) comprises a seatbelt linear displacement detector arrangement (27, 27') that is arranged to detect a linear movement of the seatbelt (7) that corresponds to the detected angular displacement of the seatbelt retractor spindle (8).

2. The seatbelt arrangement (6) according to claim 1, **characterized in that** the seatbelt arrangement (6) comprises at least one control unit (4, 19) that is arranged to determine an absolute position of the seatbelt (7) from the detected angular displacement of the seatbelt retractor spindle (8) and the corresponding linear movement of the seatbelt (7).

3. The seatbelt arrangement (6) according to claim 2, **characterized in that** said control unit (4, 19) is arranged to control at least one safety device (2, 3, 15) in a vehicle (1) in dependence of the absolute position of the seatbelt (7).

4. The seatbelt arrangement (6) according to claim 3, **characterized in that** said safety device comprises an electric motor (15).

5. The seatbelt arrangement (6) according to claim 4, **characterized in that** if an emergency situation is detected, said control unit (4, 19) is arranged to control the electric motor (15) to retract the seatbelt (7) onto the seatbelt retractor spindle (8) such that the seatbelt (7) is tensioned, restraining an occupant prior to a possible collision.

6. The seatbelt arrangement (6) according to claim 5, **characterized in that** during an impact, said control unit (4, 19) is arranged to control the electric motor (15) to release the belt to a certain extent in order to enhance collision force absorption.

7. The seatbelt arrangement (6) according to any one of the claims 2-6, **characterized in that** said safety device comprises at least one airbag (2), where said control unit (4, 19) is arranged to determine airbag inflation properties in dependence of the absolute position of the seatbelt (7).

8. The seatbelt arrangement (6) according to claim 7, **characterized in that** said control unit (4, 19) is arranged to determine the probability that a seated person is close to and/or leaning towards a vehicle dashboard with a dashboard airbag (2), and if said probability is determined to exceed a certain threshold, said control unit (4, 19) is arranged to control the dashboard airbag (2) to inflate to a lesser extent than if the probability of such a situation is determined to fall below said certain threshold.

9. The seatbelt arrangement (6) according to any one of the previous claims, **characterized in that** the first rotational angle sensor (20a, 20b, 20c) comprises a sensing unit (20a) and at least two Hall elements (20b, 20c).

10. The seatbelt arrangement (6) according to any one of the previous claims, **characterized in that** the seatbelt linear displacement detector arrangement (27, 27') either comprises
- a seatbelt roller (16) to which the seatbelt (7) is arranged to be in contact with such that the seatbelt roller (16) is arranged to rotate when the seatbelt (7) is moved a certain length; or
- an optical detector (24) that is arranged to detect the length displacement directly on seatbelt.

11. A method for determining an absolute position of a vehicle seatbelt (7), where the method comprises:
(28) detecting an angular displacement of a seatbelt retractor spindle (8) on which the seatbelt (7) is arranged to be wound;
**characterized in that** the method further comprises the steps of:
(29) detecting a linear movement of the seatbelt (7) that corresponds to the detected angular displacement of the seatbelt retractor spindle (8); and
(30) determining an absolute position of the seatbelt (7) from the detected angular displacement of the seatbelt retractor spindle (8) and the corresponding linear movement of the seatbelt (7).

12. The method according to claim 11, **characterized in that** the method comprises controlling at least one safety device (2, 3, 15) in a vehicle (1) in dependence of the absolute position of the seatbelt (7).

13. The method according to any one of the claims 11 or 12, **characterized in that** if an emergency situation is detected, an electric motor (15) is controlled to retract the seatbelt (7) onto the seatbelt retractor spindle (8) such that the seatbelt (7) is tensioned, restraining an occupant prior to a possible collision.

14. The method according to any one of the claims 11-13, **characterized in that** the method comprises determining airbag inflation properties in dependence of the absolute position of the seatbelt (7).

15. The method according to claim 14, **characterized in that** the method comprises determining the probability that a seated person is close to and/or leaning towards a vehicle dashboard with a dashboard airbag (2), and if said probability is determined to exceed a certain threshold, controlling the dashboard airbag (2) to inflate to a lesser extent than if the probability of such a situation is determined to fall below said certain threshold.
